(19) Europäisches Patentamt

European Patent Office

Office européen des brevets

(11) **EP 1 050 513 A2**

(12) **EUROPÄISCHE PATENTANMELDUNG**

(43) Veröffentlichungstag:
08.11.2000  Patentblatt 2000/45

(51) Int. Cl.⁷: **C03B 5/20**

(21) Anmeldenummer: **00108299.9**

(22) Anmeldetag: **14.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.05.1999 DE 19921289**

(71) Anmelder: **Schott-Rohrglas GmbH**
**95448 Bayreuth (DE)**

(72) Erfinder:
• **Dick, Erhard**
**95666 Mitterteich (DE)**
• **Fischer, Erich**
**95666 Mitterteich (DE)**
• **Fuchs, Roland**
**95666 Mitterteich (DE)**

(74) Vertreter: **Dr. Weitzel & Partner**
**Friedenstrasse 10**
**89522 Heidenheim (DE)**

(54) **Rinnensystem zum Führen von Glasschmelzen**

(57)  Die Erfindung betrifft ein Rinnensystem, umfassend Edelmetall-Rohrleitungen, zum Führen von Glasschmelzen; mit horizontalen oder annähernd horizontalen Rohrleitungsabschnitten; mit elektrischen Widerstands-Heizeinrichtungen zum sektionsweisen Beheizen der Rohrleitungsabschnitte.

Gemäß der Erfindung wird folgendes vorgesehen: Die Wandstärke einer Sektion ist über deren Umfang und/oder axiale Erstreckung derart bemessen, daß Temperaturdifferenzen an verschiedenen Stellen der Sektion minimiert sind.

Fig.1

**Beschreibung**

Die Erfindung betrifft ein Rinnensystem, umfassend Edelmetall-Rohrleitungen, zum Führen von Glasschmelzen.

Bei der Herstellung von Glas geht man aus von silikatischen Stoffen oder Glasscherben. Diese Ausgangsstoffe werden in metallischen Tiegeln oder in Wannen aus keramischem Material erschmolzen.

Die flüssige Glasmasse enthält physikalisch oder chemisch gebundene Gase. Diese sind unerwünscht, da sie die Qualität des Fertigproduktes beeinträchtigen würden. Sie müssen daher beseitigt werden. Hierzu ist es notwendig, die Glasschmelze zu läutern. Das Läutern kann im selben Gefäß wie das Schmelzen durchgeführt werden. Im allgemeinen bevorzugt man eine eigene Läuterwanne, die der Einschmelzwanne oder dem Einschmelztiegel nachgeschaltet ist. In der Läuterwanne wird das Glas von physikalisch oder chemisch gebundenen Gasen befreit. Die Gasblasen müssen dabei ausreichend groß sein, um möglichst schnell in der Glasschmelze zu deren Oberfläche zu gelangen.

Dabei unternimmt man alle Anstrengungen, die Entgasung möglichst vollständig durchzuführen. So werden beim Läutervorgang Läutermittel vorgesehen, wie beispielsweise $Na_2SO_4$ oder $NaCl$. Außerdem haben sich hohe Läutertemperaturen als nützlich erwiesen. Durch die Erhöhung der Läutertemperatur wird nämlich bei den meisten Gasen die physikalische und chemische Löslichkeit abgesenkt, was die Entgasung fördert.

Nach der Läuterwanne wird die flüssige Glasschmelze in den genannten Rinnensystemen der weiteren Konditionierung zugeführt. Dabei bestehen die Rinnen aus einem geschlossenen Rohrsystem. Dieses muß beheizt werden, um die Schmelze auf einer bestimmten Mindesttemperatur zu halten. Die Beheizung erfolgt im allgemeinen sektionsweise mit Hilfe elektrischer Widerstandsheizeinrichtungen. Die einzelne Rohrleitung ist somit in Sektionen unterteilt. An den beiden Enden einer jeden Sektion befindet sich ein Flansch. An die beiden Flansche einer Sektion ist ein Heiztransformator angeschlossen. Der Heizvorgang wird dabei durch Thermoelemente überwacht.

In der Praxis hat sich gezeigt, daß trotz größter Anstrengungen in der Läuterstufe Blasen in der Glasschmelze auftreten. Diese Blasen beeinträchtigen die Qualität des Fertigungsproduktes in entscheidendem Maße und sind daher höchst unerwünscht.

Der Erfindung liegt die Aufgabe zugrunde, Maßnahmen zu treffen, um das Auftreten von Gasblasen in Rinnensystemen zu vermeiden.

Diese Aufgabe wird durch die Merkmale der unabhängigen Ansprüche gelöst.

Die Erfinder haben folgendes erkannt:
In den die Glasschmelze führenden Rohrleitungen treten Temperaturdifferenzen auf, und zwar sowohl an Stellen einer Sektion, die einen axialen gegenseitigen Abstand aufweisen, als auch an solchen Stellen, die einen radialen gegenseitigen Abstand aufweisen. Diese Temperaturgradienten können die drei folgenden Gründe haben:

*    Die elektrische Energie wird in die eingangs genannten Heizflansche, welche eine Sektion begrenzen, an einer einzigen Stelle des Flansch-Umfanges eingeleitet. Die Energiedichte ist somit über den Flanschumfang ungleich groß. Im Einleitungsbereich ist sie höher, als in dem dem Einleitungsbereich diametral gegenüberliegenden Bereich. Dies führt somit zu Temperaturgradienten in Umfangsrichtung des Rohres..

*    Durch die nach oben steigende Wärme kommt es zu Konvektion. Dies führt ebenfalls zu Temperaturgradienten.

*    Die Heizflansche haben naturgemäß einen gewissen gegenseitigen axialen Abstand. Der Energieentzug ist im Bereich der Heizflansche ein größerer, als in einem mittleren axialen Bereich zwischen den Heizflanschen. Dies führt zu axialen Temperaturgradienten. Es ist bekannt, daß Temperaturdifferenzen an zwei Stellen eines elektrischen Leiters Spannungsdifferenzen erzeugen (Seebeck-Effekt). Dabei ist die Spannungsdifferenz etwa proportional der Temperaturdifferenz. Es bilden sich Anoden und Kathoden, und damit Lokalelemente. An der heißesten Stelle, der Anode, wird Sauerstoff in Form von Blasen freigesetzt.

Obgleich der Läuterprozeß mit größter Sorgfalt durchgeführt wurde, kommt es aufgrund der genannten Temperaturgradienten und der hieraus folgenden Bildung von Lokalelementen zum Entstehen von weiteren Gasblasen, die man "Sekundärblasen" nennt.

Gemäß der Erfindung wird die Aufgabe durch die Merkmale von Anspruch 1 gelöst. Demgemäß wird die Wandstärke der Rohrleitungsabschnitte über deren Umfänge und/oder über deren axiale Erstreckung derart bemessen, daß die Temperatur an allen Stellen des betreffenden Rohrabschnittes im wesentlichen gleich groß ist, so daß sich keine Lokalelemente bilden können.

Nach folgender Beziehung kann ein Temperaturgradient in einem Rinnensystem als Funktion einer Wanddickenänderung berechnet werden.

$$\Delta T(d) = -\,\alpha/2\beta + \sqrt{\frac{(\alpha/\beta)^2}{4} + \frac{U * AD * \pi * d}{I * \rho * 1 * \beta}} - 1/\beta$$

$$\alpha = 0{,}003 \; 1/K$$

$$\beta = 0{,}6 * 10 \exp - 6$$

$$1/K^2$$

$\Big\}$ *Temp.koeff. von Platin*

$\rho$ = spez. Widerstand [$\Omega$m]

U = Spannung [V]
I = Strom [A]
AD = Rohrdurchmesser [m]
l = Rohrlänge [m]

Ein dünnwandiges Rohr mit dem Durchmesser AD, der Wanddicke s und der Länge l besitzt die Querschnittsfläche $A \approx \pi * AD * s$ und den elektrischen Widerstand $R = R_{spez.} * 1/A = \rho_{spez.} * 1/\pi * AD * s$ ($\rho_{spez.}$ = spezifischer elektrischer Widerstand). Für die Temperatur gilt:

$$\rho_{spez.}(T) = \rho_{0.} [1 + \alpha (T - T_0) + 6 (T - T_0)^2]$$

Legt man eine Spannung an den Rohrenden an, so fließt ein elektrischer Strom der Stärke I = U/R durch das Rohr. Die elektrische Leistung P wird als Wärme im Materialvolumen freigesetzt ($P = U * I = R * I^2 = U^2/R$).
Anhang 1 zeigt die Abhängigkeit der Temperaturdifferenz über der Dicke der aus Platin bestehenden Rohrwandung.
Es wurde der folgende Versuch durchgeführt:
Ein 600 mm langes, Pt - Rohr mit einer Wanddicke (s) von 0,7 mm und einem Durchmesser (AD) von 80 mm wurde mittels zweier Flansche elektrisch beheizt (50 Hz Wechselstrom). Strom und Spannung konnten mittels geeigneter Meßgeräte abgelesen werden. Die Temperaturmessung erfolgte über PtRh10/Pt - Thermoelemente.
Auf Anhang 2 wird verwiesen.
Die Erfindung ist anhand der Zeichnungen näher erläutert. Darin ist im einzelnen folgendes dargestellt:

Figur 1     zeigt eine Sektion aus einem Rinnensystem in Seitenansicht.
Figur 2     zeigt einen Querschnitt durch die Sektion gemäß Figur 1 in gegenständlicher Darstellung, und zwar in einem Schnitt im Bereich eines Heizflansches.
Figur 3     zeigt eine Sektion gemäß der Erfindung in einem Axialschnitt.
Figur 4     zeigt eine Sektion ohne Heizflansche in einem Längsschnitt.
Figur 5     zeigte einen achssenkrechten Querschnitt durch den Gegenstand von Figur 4 in der Schnittebene V-V.
Figur 6     zeigt eine aus drei Einzelteilen aufgebaute Sektion in perspektivischer Explosionsdarstellung.

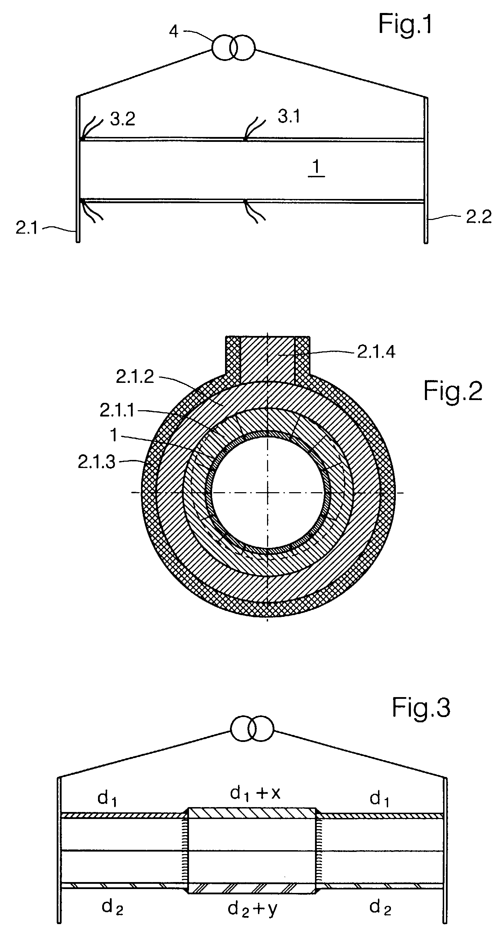

In Figur 1 erkennt man Sektion 1 als Bestandteil eines geschlossenen Rohrsystems. An jedem Ende der Sektion 1 befindet sich ein Flansch 2.1, 2.2. Thermoelemente 3.1, 3.2 sind an der Wandung der Sektion 1 angeordnet. Sie sind Bestandteil eines Temperaturüberwachungssystems. Ein Heiztransformator 4 ist an die beiden Flansche 2.1, 2.2 angeschlossen und dient zum Aufheizen der Sektion 1 mit der darin strömenden Glasschmelze.
In Figur 2 erkennt man wiederum die Sektion 1, bestehend aus einem Platinrohr. Sie ist umgeben von einem Platinflansch 2.1.1, der wiederum von einem Nickelflansch 2.1.2 umgeben ist. Der Nickelflansch 2.1.2 ist von einem isolierenden Mantel 2.1.3 umgeben. Durch den Stutzen 2.1.4 hindurch wird elektrische Energie zugeführt.
Bei der Ausführungsform gemäß Figur 3 erkennt man wiederum die beiden Flansche 2.1, 2.2 sowie den Heiztransformator 4.
Die Sektion 1 ist im vorliegenden Falle aus einer oberen und einer unteren Halbschale aufgebaut. Die beiden Halbschalen sind ihrerseits wiederum aus drei axialen Segmenten zusammengesetzt. Es liegen bei der Sektion 1 insgesamt vier unterschiedliche Blechstärken vor - siehe die Mantelstärken d1, d2, d1+x und d2+y.

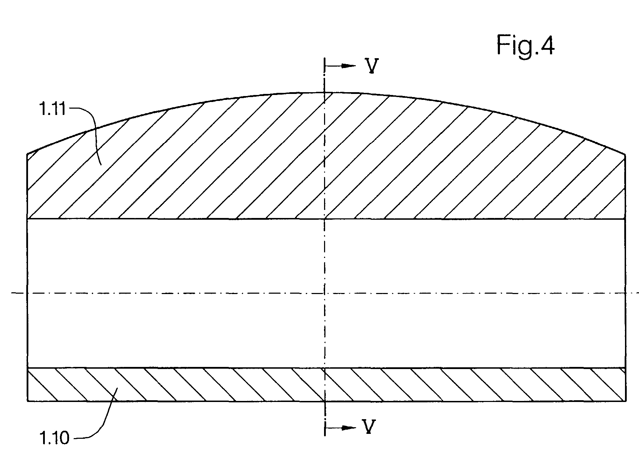

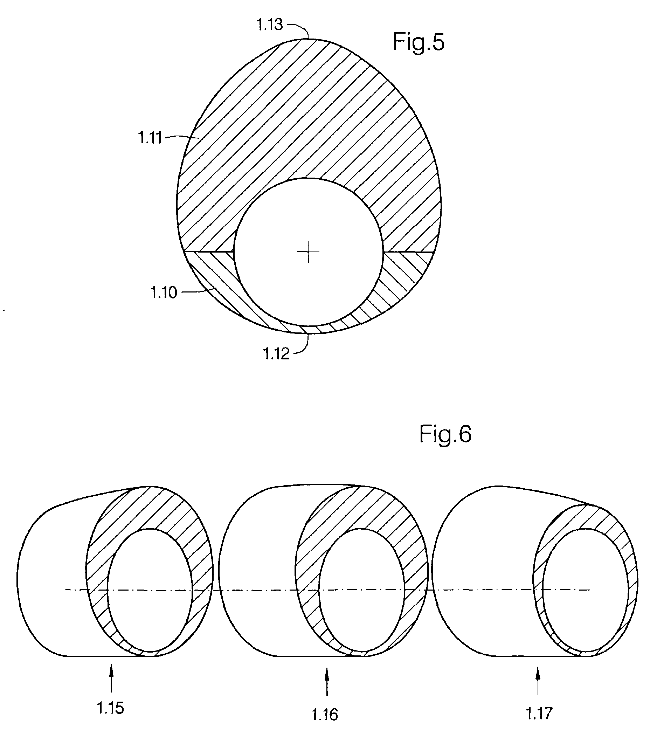

Figur 4 veranschaulicht eine Sektion, die wiederum aus zwei Halbschalen 1.10 und 1.11 aufgebaut ist. Siehe auch Figur 5. Wie man dort erkennt, nimmt die Wandstärke von einem unteren Scheitelpunkt 1.12 bis zu einem oberen Scheitelpunkt 1.13 zu (hier übertrieben dargestellt). Wie man aus Figur 4 erkennt, hat die obere Halbschale 1.11 eine bombierte Außenkontur.

Bei der Ausführungsform gemäß Figur 6 ist die Sektion nicht aus Schalen aufgebaut, sondern aus Ringen 1.15, 1.16, 1.17. Setzt man die drei Ringe zusammen, so ergibt sich - je nach Gestaltung - eine Form gemäß der Ausführungsform der Figuren 4 und 5.

**Patentansprüche**

1. Rinnensystem, umfassend Edelmetall-Rohrleitungen, zum Führen von Glasschmelzen;

   1.1 mit horizontalen oder annähernd horizontalen Rohrleitungsabschnitten;
   1.2 mit elektrischen Widerstands-Heizeinrichtungen zum sektionsweisen Beheizen der Rohrleitungsabschnitte;
   1.3 die Wandstärke einer Sektion ist über deren Umfang und/oder axiale Erstreckung derart bemessen, daß Temperaturdifferenzen an verschiedenen Stellen der Sektion minimiert sind.

2. Rinnensystem nach Anspruch 1, dadurch gekennzeichnet, daß die Wandstärke der einzelnen Sektionen über deren Umfang und/oder axiale Erstreckung derart bemessen ist, daß die Temperatur an allen Stellen der betreffenden Sektion im wesentlichen gleich groß ist.

3. Rinnensystem nach Anspruch 1 oder 2, dadurch gekennzeichnet, daß einzelne Sektionen aus Zylinderschalen zusammengesetzt sind, die von Schale zu Schale unterschiedliche Wandstärke aufweisen.

4. Rinnensystem nach Anspruch 1 oder 2, dadurch gekennzeichnet, daß einzelne Sektionen aus Zylinderschalen zusammengesetzt sind, die jeweils eine variable Wandstärke aufweisen.

5. Rinnensystem nach Anspruch 1 oder 2, gekennzeichnet durch die folgende Merkmale:

   5.1 einzelne Rohrleitungsabschnitte sind aus einer Mehrzahl von Zylinderabschnitten zusammengesetzt;
   5.2 die einzelnen Zylinderabschnitte weisen über ihren Umfang eine variable Wandstärke auf;
   5.3 der Wandstärkenverlauf von Zylinderabschnitt zu Zylinderabschnitt ist unterschiedlich groß.

6. Rinnensystem nach einem der Ansprüche 1 bis 5, dadurch gekennzeichnet, daß die Außenhaut der Sektionen oder Sektionsabschnitte frei von Sprungstellen ist.

7. Rinnensystem nach einem der Ansprüche 1 bis 6, dadurch gekennzeichnet, daß die strömungsberührten Innenflächen der Sektionen oder Sektionsabschnitte frei von Sprungstellen sind.

Fig.1

4

3.2     3.1

1

2.1     2.2

Fig.2

2.1.4

2.1.2
2.1.1
1
2.1.3

Fig.3

$d_1$     $d_1 + x$     $d_1$

$d_2$     $d_2 + y$     $d_2$

Fig.4

Fig.5

1.13

1.11

1.10

1.12

Fig.6

1.15　　　　　1.16　　　　　1.17